# EUROPEAN PATENT SPECIFICATION

(11) **EP 0 402 880 B1**
(45) Date of publication and mention of the grant of the patent: **24.08.1994**
(21) Application number: 90111142.7
(22) Date of filing: 13.06.1990
(51) Int. Cl.: H01F 5/00, G11B 5/17, G11B 5/31

(54) **Method for manufacturing multiturn thin film coil**
Herstellungsverfahren einer Dünnfilmspule mit mehrteiliger Wicklung
Procédé de fabrication d'un enroulement à multispires en film mince

(30) Priority: 16.06.1989 JP 155350/89; 03.07.1989 JP 172236/89
(43) Date of publication of application: 19.12.1990
(73) Proprietor: MATSUSHITA ELECTRIC INDUSTRIAL CO., LTD., Kadoma-shi, Osaka-fu, 571 (JP)
(72) Inventor: Nagata, Yuji, Yao-shi, Osaka-fu (JP); Fukazawa, Toshio, Fushimi-ku, Kyoto-shi, Kyoto-fu (JP); Wada, Kumiko, Kawanishi-shi, Hyogo-ken (JP); Tosaki, Yoshihiro, Ibaraki-shi, Osaka-fu (JP)
(74) Representative: Eisenführ, Speiser & Partner

(56) References cited:
- WO-A-85/02479
- GB-A- 2 087 656
- US-E- 29 326
- PATENT ABSTRACTS OF JAPAN vol. 6, no. 133 (P-129)(1011) 20 July 1982,& JP-A-57 058217 (HITACHI SEISAKUSHO K.K.) 07 April 1982,
- PATENT ABSTRACTS OF JAPAN vol. 10, no. 348 (P-519)(2404) 22 November 1986,& JP-A-61 148622 (NIPPON TELEGR & TELEPH CORP NTT ) 07 July 1986,
- PATENT ABSTRACTS OF JAPAN vol. 5, no. 100 (P-68)(772) 27 June 1981,& JP-A-56 044119 (HITACHI SEISAKUSHO K.K.) 23 April 1981,
- PATENT ABSTRACTS OF JAPAN vol. 14, no. 183 (P-1035)(4126) 12 April 1990,& JP-A-02 031316 (VICTOR CO OF JAPAN LTD) 01 February 1990,

## Description

### METHOD FOR MANUFACTURING MULTITURN THIN FILM COIL

### BACKGROUND OF THE INVENTION

### 1. Field of the invention

The present invention relates to a method for manufacturing a multiturn thin film coil preferably adapted to a thin film magnetic head such as a tape drive or the like.

### 2. Description of the related art

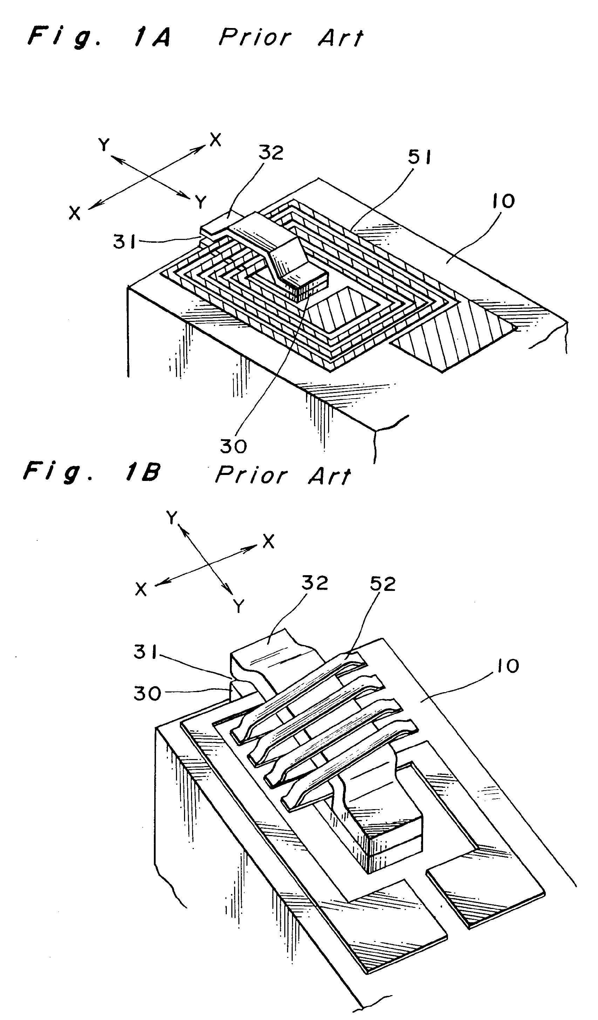

As to the construction of a multiturn thin film coil as a component of such a thin film magnetic head, there are known three alternatives, namely spiral coil 51 as shown in Fig. 1A, zigzag coil 52 as shown in Fig. 1B and helical coil 53 as shown in Fig. 1C and these are already revealed in published literature (IEEE Transactions on Magnetics, Vol. MAG-9 No. 3, page 317). Fig. 1A shows a film magnetic head which includes a magnetic core comprising upper and lower magnetic parts 32 and 30 with a magnetic gap 31 therebetween and a spiral coil 51 arranged on a substrate 10. As shown in the figure, this coil 51 on the substrate 10 has its coiling pattern planar and expanded in X- and Y-directions, thus occupying a large area, hence it is difficult to arrange a plurality of magnetic heads on one substrate 10 at a high density and in parallel across X-direction, this resulting in difficulty of manufacturing a high density multichannel head. Also, the magnetic core is bound to be dimensioned larger in Y-direction with resultant increase of the magnetic path length, this, in turn, resulting in an increased loss of signal fluxes and interfering with the effect of the multiturn coil.

The zigzag coil 52 of Fig. 1B with its smaller dimension in X-direction allows manufacture of a high-density multichannel head, but also has a defect of increased loss of the signal fluxes due to the increase of the magnetic path length of the magnetic core similar to the case of the aforementioned spiral coil.

As a method for eliminating the aforementioned defects proposed is the use of a helical coil 53 shown in Fig. 1C. A conventional method for manufacturing a helical coil comprises the steps of forming a coil conducting film 55, forming an insulating layer 56, forming a through-hole 57 in a coil conducting film 55 and insulating layer 56 and forming a conducting layer for connecting the adjacent coil conducting layer 55 to the through hole 57 layer after layer and to finally complete a multiturn film coil after repetition thereof. Hence, this type of multiturn film coil was complicated in its manufacturing method.

In order to decrease defective and fault rates in manufacture of magnetic heads, JP-A-56/044119 defining the closest prior art from which the invention proceeds discloses a magnetic head wherein inter-layer connecting conductors are formed on nearly flat bases. At the bottom part of a connection hole limiting an inter-layer connection of a prescribed area, a conductor is partially exposed. A connecting conductor is formed on the surface of a base. An electric connection is provided at a prescribed part, and a first hole and a first connection, a second hole and a second connection, a third hole and a third connection and so on are positioned and connected, thereby obtaining a multiple winding coil. The widths of insulators between the conductors can be made wider than those of the conductors so that a short circuit between both can be prevented. Further, since the connections and the connecting conductors are never brought into contact directly with a side end part, an inter-layer short circuit and break of wiring can be prevented from becoming easy to occur.

From JP-A-57/058217, a further thin film magnetic head is known wherein a magnetic substance pattern is stuck on a substrate and an electric conductor for a multiturn coil and an insulator are vapor-deposited alternately by a mask waper-desposition method. Several layers are made one group and are etched into the same form wherein its angle is polished so as to form a taper polished part. A multilayer electric conductor layer is exposed, and this exposed part is utilized as a connecting terminal. As a result, a coil is prepared. An upper magnetic substance is stuck on it, and the head element is completed.

### SUMMARY OF THE INVENTION

An object of the present invention is to provide a method for manufacturing a thin film multiturn coil featuring the possibility of decreasing the dimensions thereof occupying on the substrate as well the magnetic path length of the a magnetic core and also being simple and easy.

In accomplishing this object, according to the present invention, there is provided a method for manufacturing a thin film multiturn coil comprising the steps of:
forming a base structure having a substrate;
forming a loop-shaped laminate on said base structure, said laminate comprising a plurality of conducting layers and insulating layers laminated alternately, and having a space (A) of discontinuity on said base structure;
removing an upper portion of a pair of discontinued end sections of said loop-shaped laminate formed on said base structure so as to reveal an end face of each conducting layer and each insulating layer; and
mounting electrically conductive members between the revealed end faces of said individual conducting layers in each discontinued end section of said loop-shaped laminate to complete a multiturn coil;
characterized in that
said base structure further comprises
a base layer formed in a given area on a topside of said substrate, wherein the topside of said base layer has a substantially predetermined gradient (Θ) with respect to the topside of said substrate and the part of said laminate on said base layer has substantially the same gradient with respect to the part of said laminate on said substrate as the topside of said base layer with respect to said substrate;
the method further comprises another step of forming a further insulating layer for covering thick enough to protrude above the topside of said laminate on and inside said loop-shaped laminate before said removing step; and that
in said removing step said insulating layer for covering formed between said both discontinued end sections and the upper portion of each discontinued end section of said loop-shaped laminate are removed so as to be substantially parallel to the topside of said substrate, and said conductor members are supported by said insulating layer for covering at a position between the discontinued end sections of said loop-shaped laminate.

Further advantageous embodiments of the invention are defined in the subclaims 2 to 6.

According to the aforementioned manufacturing method of the present invention, the laminate made up of a plurality of conducting layers and insulating layers is made into a coil loop-shaped with a space of discontinuity by, for instance, a photolithographic method. Then by leveling both discontinued end sections of the loop-shaped laminate the revealed end faces of the constituent conducting layers are formed at once, and a multiturn coil is completed by bridging the corresponding pairs of revealed end faces thereof with conductive members.

Hence, unlike in the prior art the photolithographic working may be dispensed with layer by layer. As a result, according to the method of the present invention for manufacturing the multiturn coil for a film magnetic head or the like, the film magnetic head with a high track density and high efficiency can be manufactured economically with a high yield.

### BRIEF DESCRIPTION OF THE DRAWINGS

These and other objects and features for the present invention will become apparent from the following description taken in conjunction with the preferred embodiment thereof with reference to the accompanying drawings, in which:
Figs. 1A, 1B, 1C are perspective views showing film magnetic heads using a spiral coil, zigzag coil and helical coil respectively, as described above;
Figs. 2, 2A are a simplified perspective view showing the external appearance of a film magnetic head manufactured by a method including the manufacturing method for a four-turn coil described in a first embodiment of the present invention and a sectional view of a magnetic head in complete form respectively;
Figs. 3I - 3VII are illustratory views successively showing the individual steps of the method for manufacturing the film magnetic head shown in Figs. 2, 2A;
Figs. 4, 4A are a simplified perspective views showing the external appearance of the film magnetic head manufactured by a method including the manufacturing method for a four-turn coil described in a second embodiment of the present invention and a sectional view of the magnetic head in complete form respectively; and
Figs. 5I - 5VIII are illustratory views successively showing the individual steps of the method for manufacturing the film magnetic head described in the second embodiment of the invention.

### DETAILED DESCRIPTION OF THE INVENTION

### (First embodiment)

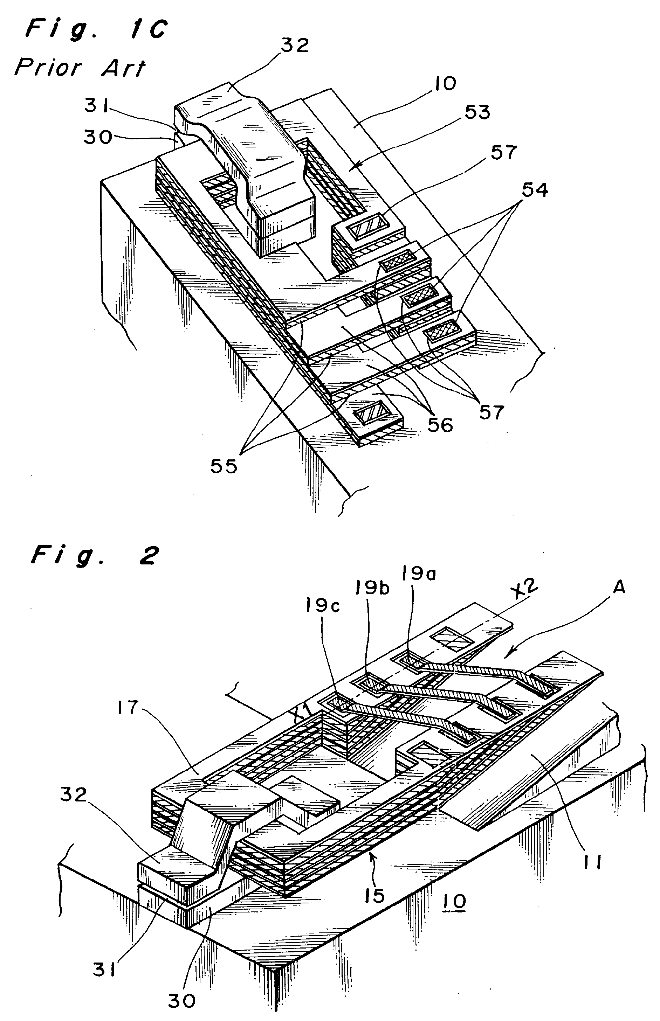

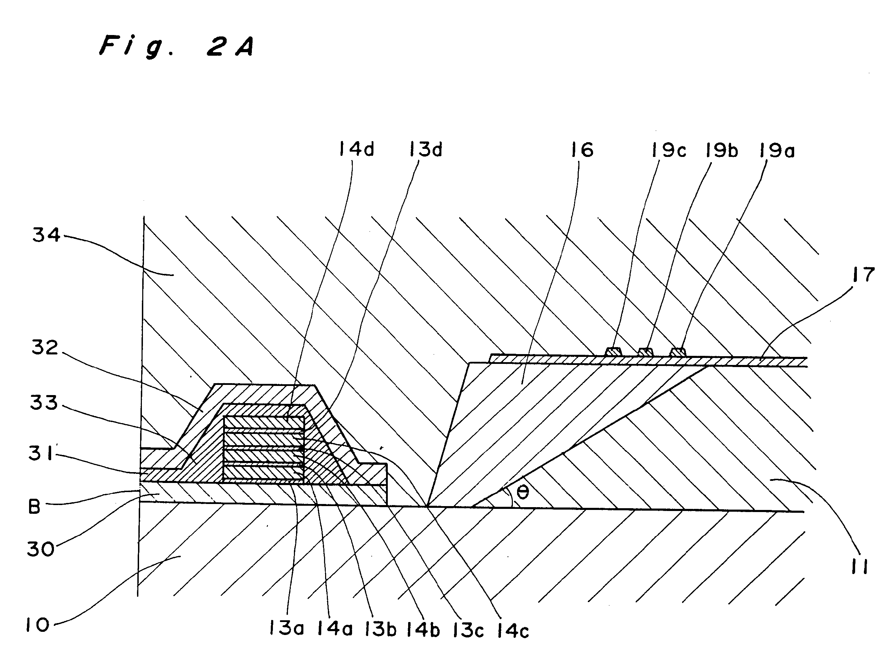

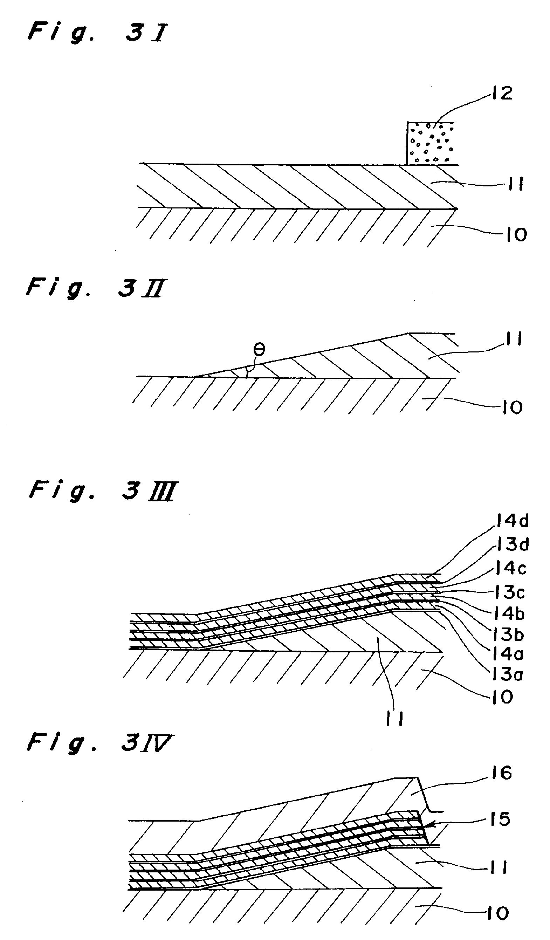

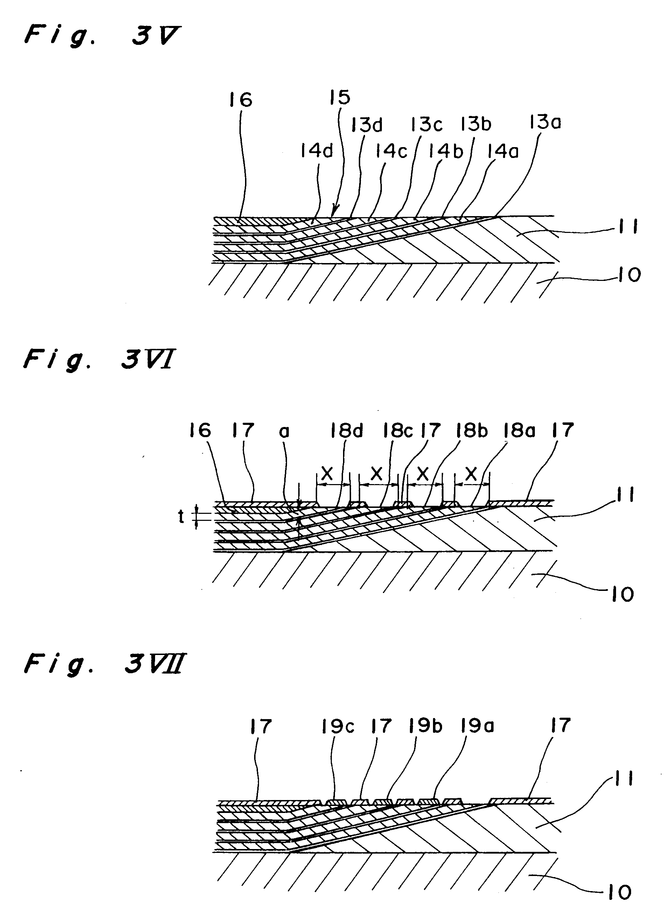

Figs. 2, 2A are a perspective view and a sectional view of a four-turn coil type film magnetic head manufactured by a method including the method for manufacturing a multiturn coil described in a preferred embodiment of the present invention respectively. It is to be noted that, as seen from comparison of Fig. 2 with Fig. 2A, Fig. 2 is a simplified view with an insulating layer 16, magnetic gap layer 31 and protective layer 34 omitted. Figs. 3I - 3VII are sectional views taken along the line X1-X2 in Fig. 2 respectively showing the method according to the first embodiment of the present invention.

Referring mainly to Figs. 3I-3VII, steps for the manufacturing method according to this embodiment will hereinafter be described successively.

First a lower magnetic part 30 is formed on a substrate 10 of glass, ceramics or the like by sputtering and photolithography (See Fig. 2.).

Then, as shown in Fig. 3I, an insulating base layer 11 of SiO₂ is formed flatly by sputtering and then a masking photo-resist layer 12 is formed thereon. Then, as shown in Fig. 3II, the insulating base layer is formed by the well-known ion beam etching method or the like to be sloped at an angle of ϑ. This angle ϑ is preferred to be not more than 45°. The reason therefor will be stated later. Thus, the base structure is formed, comprising the sloped insulating base layer 11 on the substrate 10.

In the next step, as shown in Fig. 3III, insulating layers 13a, 13b, 13c, 13d and conducting layers 14a, 14b, 14c, 14d of Cu, Al or the like are alternately laminated by vapor deposition or spattering to form a four-layer laminate 15. Then, the laminate 15 is worked by photolithography to be U-shaped or in loop form with a space of discontinuity A as shown in Fig. 2. As seen from Fig. 3IV, the topside of the laminate 15, the portion thereof lying on the base layer 11, has a gradient substantially the same as that of the base layer 11.

Thereafter, as shown in Fig. 3V, the insulating layer 16 is formed thicker than the insulating base layer 11. The recess inside the U-shaped laminate 15 is filled with the insulating layer 16 (See Fig. 2A.).

In the next step, as shown in Fig. 3V, flattening work is applied to the insulating layer 16 and the laminate 15 by the etch back method (a known flattening technique) utilizing the ion beam etching method or the like or a mechanical grinding method until the insulating layer and the end face of each conducting layer 14a, 14b, 14c, 14d is revealed and the end face becomes substantially parallel to the substrate 10.

Then, as seen from Fig. 3VI, another insulating layer 17 is formed on the flattened laminate 15, insulating layer 16 and base layer 11, and then the insulating layer 17 is partly removed by etching so that connecting terminal parts 18a, 18b, 18c, 18d are revealed.

In the following step, as shown in Fig. 3 VII and Figs. 2, 2A, filmy conductive strips of Cu, Al or the like 19a, 19b, 19c are formed by sputtering and photolithography to link the corresponding pairs of the revealed end faces of the individual conducting layers and the pairs of conducting layers 14a, 14b, 14c, 14d thus connected respectively, a four-turn helical coil is completed. The individual filmy conductive strips 19a, 19b, 19c are supported by the insulating layer 16. Alternatively, the conducting layers 14a-14d may as well be connected by bonding with wires instead of the filmy conductive strips 19a-19c.

Although, as mentioned above, the gradient of the sloped base layer is set at not more than 45°, it is thereby possible to form connecting terminal portions X in length of the individual conducting layers 14a, 14b, 14c, 14d not less than "t" in film thickness. When the individual conducting layers and insulating layers constituting the laminate 15 are formed by spattering, vapor deposition or plating, the same mass of the material is deposited per unit surface area parallel to the top surface of the substrate 10. This means that the film thickness "a" in the sloped section of the conducting layer is equal to the thickness "t". Hence, the length X of the connection terminal portion is represented by the following formula. 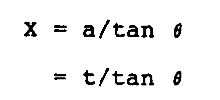
hence, when ϑ= 45°, X ≧ t and this means facilitation of connection of the filmy conductive strips 19a, 19b, 19c with the connection terminal portions.

In the next step the insulating layer 16 formed on the magnetic base layer 30, the peripheral part thereof, is partly removed and after forming a magnetic gap layer 31 for formation of a magnetic gap with SiO₂ film as material by spattering and photolithography, a magnetic upper layer 32 is formed on the aforementioned gap layer 31 and then a protective layer 34 is formed to cover the entire structure on the substrate 10.

Then, finally, the contact surface B of the head against a magnetic medium which will advance across the head is finished by grinding to complete a film magnetic head.

### (Second embodiment)

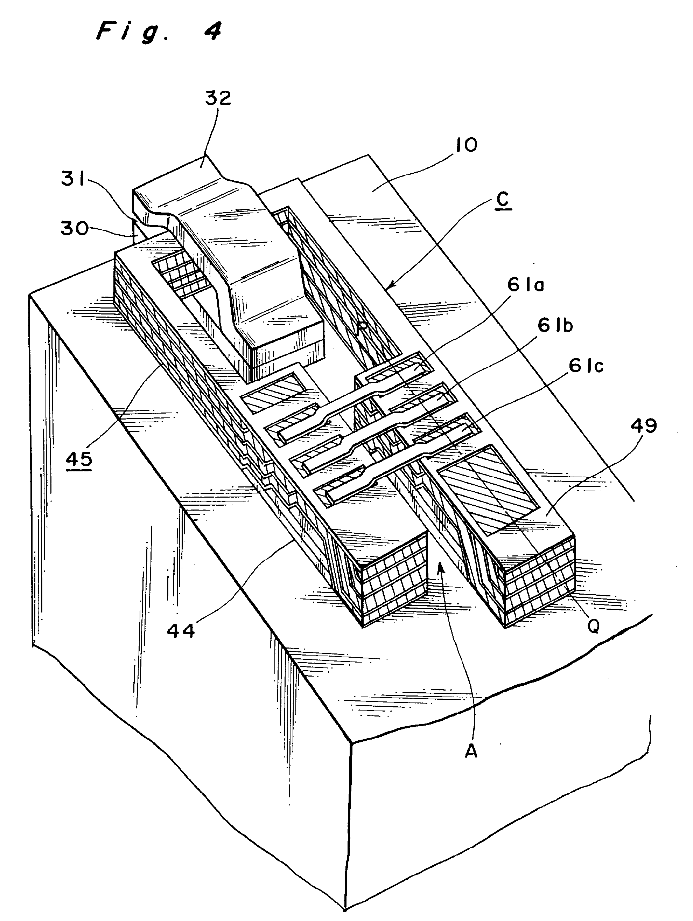

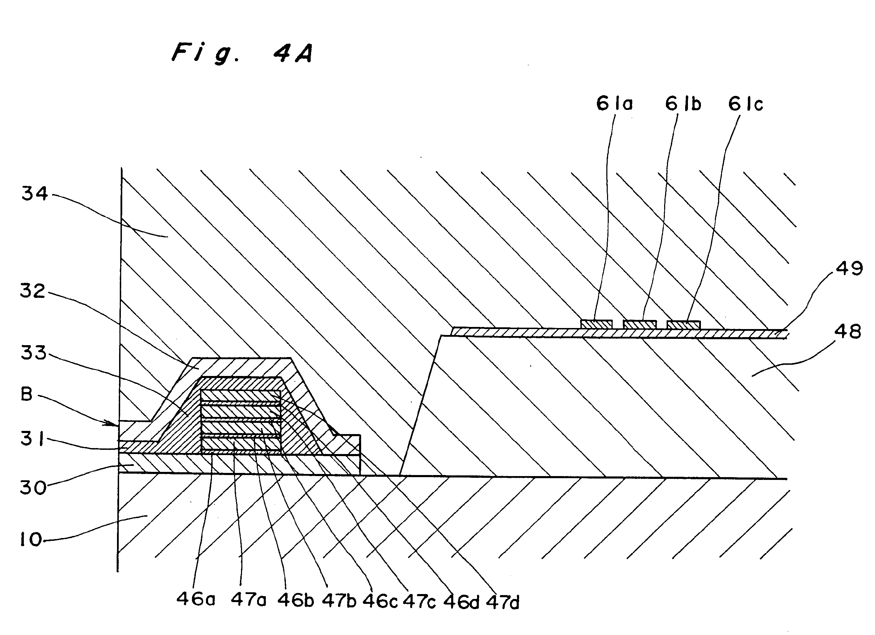

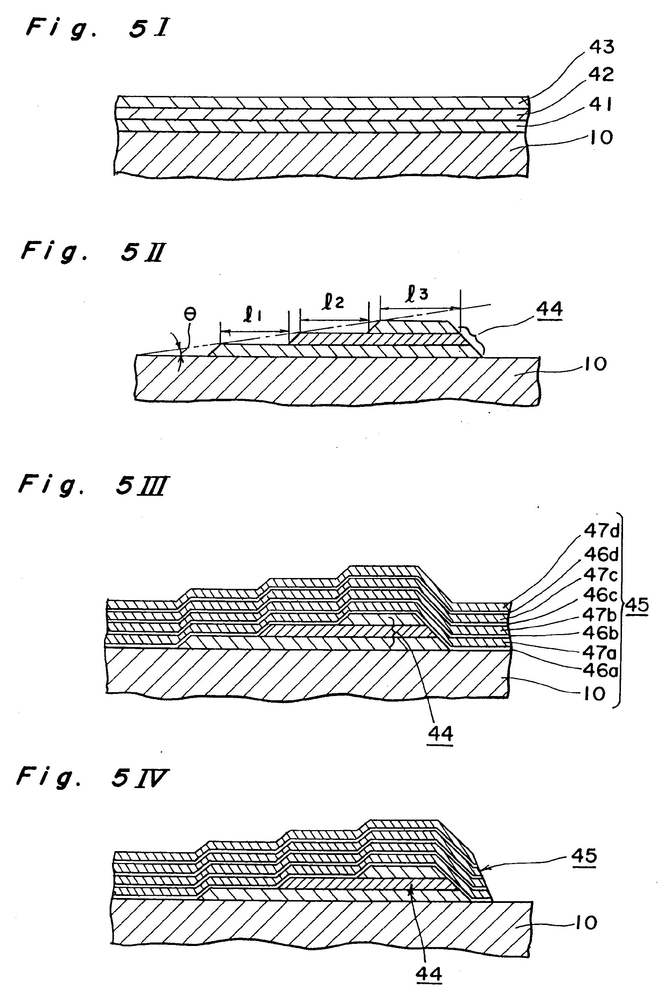

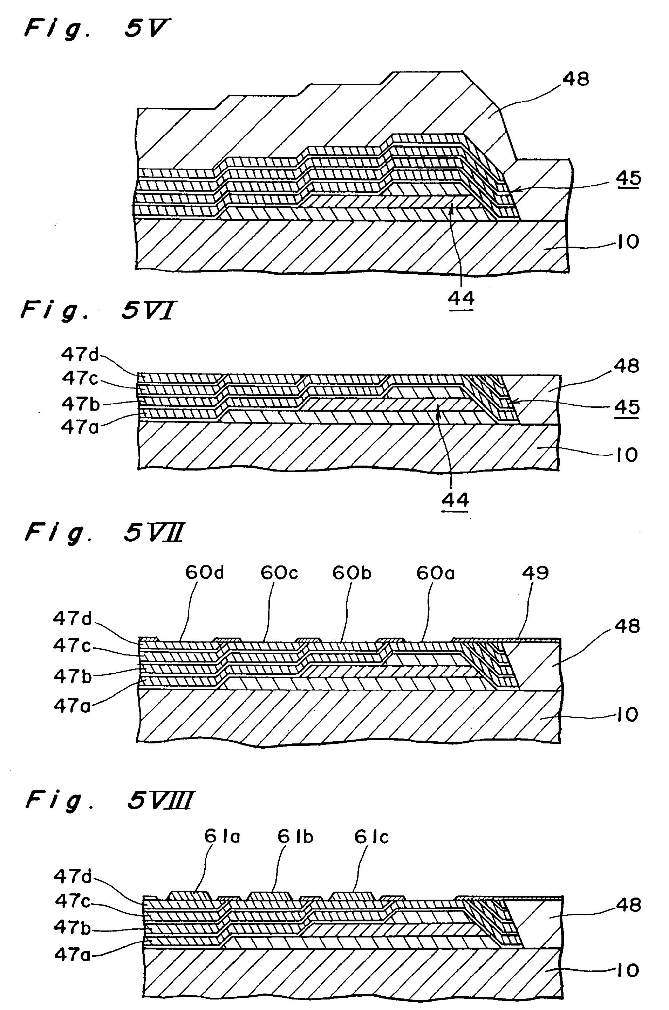

Figs. 4, 4A, 5 show the second embodiment of the present invention. Figs. 4, 4A shows the external view and the sectional view of a four-turn film magnetic head manufactured by a method in the second embodiment of the invention including the method for manufacturing a multiturn coil respectively. As in the first embodiment above, Fig. 4 is a simplified view, while Fig. 4A is a sectional view of a complete film magnetic head. Figs. 5I-VIII are sectional views taken along the line P-Q in Fig. 3, showing the method for manufacturing a film coil according to the second embodiment of the invention.

The comprising steps of the manufacturing method in the second embodiment of the invention will be described below successively with reference being made mainly to Figs. 5I-VIII.

First, the magnetic lower layer 30 is formed on the substrate 10 of glass, ceramics or the like (See Fig. 4.).

Then, a copper layer 41, SiO₂ layer and another copper layer 43 are formed successively as shown in Fig. 5I.

As shown in Fig. 5II, these layers are cut by photolithography to form a stepped base layer 44 having substantially a gradient of ϑ. Thus a base structure comprising a base layer 44 and the substrate 10 is formed.

In the next step, as shown in fig. 5III, insulating layers 46a, 46b, 46c, 46d and conducting layers 47a, 47b, 47c, 47d of Cu, Al or the like are alternatively laminated by vapor deposition or spattering to form a four-layer laminate 45.

In the step shown in Fig. 5IV the aforementioned laminate 45 is cut by photolithography to be in U- shaped as shown in Fig. 4, that is, a loop with a space of discontinuity A.

As shown in Fig. 5V, an insulating layer 48 is formed with a thickness not less than that of the insulating base layer 44. The recess inside the U-shaped laminate 15 is filled with the laminating layer 48 (See Fig. 4A.).

Then, as shown in Fig. 5VI, flattening work is done by the etch back method utilizing the ion beam etching technique or by mechanical grinding until the end faces of the insulating layers 48 as well as conducting layers 47a, 74b, 47c, 47d comprising the laminate 45 are revealed.

In the next step, as shown in Fig. VII, an insulating layer 49 is formed on the flattened laminate 45 and base layer 11 and then the connection terminal portions 60a, 60b, 60c, 60d are revealed by removing the insulating layer 17 by spot etching.

Thereafter, as shown in Fig. 5VIII, filmy conductive strips 61a, 61b, 61c are formed between the revealed portions of the individual conducting layers on both shanks and the conducting layers 47a, 47b, 47c, 47d are connected thereby for a four-turn helical coil to be completed. Then, by making the lengths ℓ₁, ℓ₂, ℓ₃ of the revealed end faces of the individual insulating layers 41, 42, 43 larger than the respective layer thicknesses, connection terminal portions whose lengths are not less than the thicknesses of the individual conducting layers 47a, 47b, 47c, 47d can be formed, this facilitating making in a later step of filmy conductive strips 61a, 61b, 61c.

Then the edge portion of an insulating layer 33 is formed on the magnetic base layer 30 for formation of the magnetic gap layer 31 for providing a magnetic gap by means of SiO₂ film and, thereafter, the magnetic top layer 32 is formed on the aforementioned gap layer 31 and the protective layer 34 is formed to cover the whole structure on the substrate 10.

Finally, the contact face B of the head against the magnetic medium is finished by grinding or the like and a film magnetic head is thus completed.

## Claims

1. A method for manufacturing a thin film multiturn coil comprising the steps of:
forming a base structure (10, 11; 10, 44) having a substrate (10);
forming a loop-shaped laminate (15; 45) on said base structure (10, 11; 10, 44), said laminate (15; 45) comprising a plurality of conducting layers (14a-14d; 47a-47d) and insulating layers (13a-13d; 46a-46d) laminated alternately, and having a space (A) of discontinuity on said base structure (10, 11; 10, 44);
removing an upper portion of a pair of discontinued end sections of said loop-shaped laminate (15; 45) formed on said base structure (10, 11; 10, 44) so as to reveal an end face of each conducting layer (14a-14d; 47a-47d) and each insulating layer (13a-13d; 46a-46d); and
mounting electrically conductive members (19a-19d; 61a-61d) between the revealed end faces of said individual conducting layers in each discontinued end section of said loop-shaped laminate (15; 45) to complete a multiturn coil;
characterized in that
said base structure (10, 11; 10, 44) further comprises a base layer (11; 44) formed in a given area on a topside of said substrate (10), wherein the topside of said base layer (11; 44) has a substantially predetermined gradient (Θ) with respect to the topside of said substrate (10), and the part of said laminate (15; 45) on said base layer (11, 44) has substantially the same gradient with respect to the part of said laminate (15; 45) on said substrate (10) as the topside of said base layer (11; 44) with respect to said substrate (10);
the method further comprises another step of forming a further insulating layer (16; 48) for covering thick enough to protrude above the topside of said laminate (15; 45) on and inside said loop-shaped laminate (15; 45) before said removing step; and that
in said removing step said insulating layer (16; 48) for covering formed between said both discontinued end sections and the upper portion of each discontinued end section of said loop-shaped laminate (15; 45) are removed so as to be substantially parallel to the topside of said substrate (10), and said conductor members (19a-19c; 61a-61c) are supported by said insulating layer (16; 48) for covering at a position between the discontinued end sections of said loop-shaped laminate (15; 45).

2. A method as claimed in claim 1, wherein said multiturn coil is one for use in a film magnetic head.

3. A method as claimed in claim 1, the topside of said base layer (11) is an inclined plane.

4. A method as claimed in claim 3, wherein angle of inclination (ϑ) of the inclined plane of said base layer (11) is not more than 45°.

5. A method as claimed in claim 1, wherein the topside of said base layer (44) is inclined and stepped.

6. A method as claimed in claim 5, wherein individual step lengths (ℓ₁, ℓ₂, ℓ₃) are not smaller than the thicknesses of the respective conducting layers (41, 42, 43) of said laminate (45).

## Patentansprüche

1. Herstellungsverfahren einer Dünnfilmspule mit mehreren Windungen mit den Schritten:
eine Basisstruktur (10, 11; 10, 44) mit einem Substrat (10) zu bilden;
auf der Basisstruktur (10, 11; 10, 44) eine schleifenförmige Beschichtung (15; 45) mit einer Vielzahl von alternierend geschichteten leitenden (14a-14d; 47a-47d) und isolierenden Schichten (13a-13d; 46a-46d) und einer Unstetigkeitsstelle (A) auf der Basisstruktur (10, 11; 10, 44) auszubilden;
einen oberen Abschnitt eines Paares von unterbrochenen Endbereichen der auf der Basisstruktur (10, 11; 10, 44) ausgebildeten schleifenförmigen Beschichtung (15; 45) zu entfernen, um eine Endfläche jeder leitenden (14a-14d; 47a-47d) und jeder isolierenden Schicht (13a-13d; 46a-46d) freizulegen; und
elektrisch leitende Teile (19a-19d; 61a-61d) zwischen den freigelegten Endflächen der einzelnen leitenden Schichten in jedem unterbrochenen Endbereich der schleifenförmigen Beschichtung (15; 45) anzuordnen, um eine Spule mit mehreren Windungen zu vollenden;
dadurch gekennzeichnet, daß
die Basisstruktur (10, 11; 10, 44) weiterhin enthält
eine in einem bestimmten Gebiet auf der Oberseite des Substrats (10) ausgebildete Basisschicht (11; 44), wobei die Oberseite der Basisschicht (11; 44) eine im wesentlichen vorbestimmte Steigung (ϑ) gegenüber der Oberseite des Substrats (10) besitzt, und der Teil der Beschichtung (15; 45) auf der Basisschicht (11; 44) im wesentlichen dieselbe Steigung gegenüber dem Teil der Beschichtung (15, 45) auf dem Substrat (10) wie die Oberseite der Basisschicht (11; 44) gegenüber dem Substrat (10) besitzt;
das Verfahren außerdem den weiteren Schritt aufweist, eine weitere isolierende Schicht (16; 48) vor dem Entfernungsschritt auszubilden, um eine genügend dicke, die Oberseite der Beschichtung (15; 45) auf und innerhalb der schleifenförmigen Beschichtung (15; 45) überragende Deckschicht zu erhalten; und daß
in dem Entfernungsschritt die isolierende Schicht (16; 48) zur Abdeckung, ausgebildet zwischen beiden unterbrochenen Endbereichen und dem oberen Abschnitt jedes unterbrochenen Endbereiches der schleifenförmigen Beschichtung (15; 45), entfernt wird, um im wesentlichen parallel zu der Oberseite des Substrats (10) zu verlaufen, und die leitenden Teile (19a-19c; 61a-61c) von der isolierenden Schicht (16; 48) gestützt werden, um an einer Stelle zwischen den unterbrochenen Endbereichen der schleifenförmigen Beschichtung (15; 45) abzudecken.

2. Verfahren nach Anspruch 1, bei dem die Spule mit mehreren Windungen zur Verwendung in einem Filmmagnetkopf geeignet ist.

3. Verfahren nach Anspruch 1, bei dem die Oberseite der Basisschicht (11) eine schräge Ebene ist.

4. Verfahren nach Anspruch 3, bei dem ein Neigungswinkel (ϑ) der schrägen Ebene der Basisschicht (11) nicht größer als 45° ist.

5. Verfahren nach Anspruch 1, bei dem die Oberseite der Basisschicht (44) abgeschrägt und abgestuft ist.

6. Verfahren nach Anspruch 5, bei dem einzelne Abstufungslängen (l₁, l₂, l₃) nicht kleiner als die Dicken der jeweiligen leitenden Schichten (41, 42, 43) der Beschichtung (45) sind.

## Revendications

1. Procédé de fabrication d'un enroulement à plusieurs spires à couches minces, comprenant les étapes suivantes :
la formation d'une structure de base (10, 11 ; 10, 44) ayant un substrat (10),
la formation d'un stratifié (15 ; 45) en forme de boucle sur la structure de base (10, 11 ; 10, 44), le stratifié (15 ; 45) comprenant plusieurs couches conductrices (14a-14d ; 47a-47d) et des couches isolantes (13a-13d ; 46a-46d) qui sont stratifiées en alternance et ayant un espace (A) de discontinuité sur la structure de base (10, 11 ; 10, 44),
l'enlèvement d'une partie supérieure d'une paire de tronçons discontinus d'extrémité du stratifié en forme de boucle (15 ; 45) formé sur la structure de base (10, 11 ; 10, 44) afin qu'une face d'extrémité de chaque couche conductrice (14a-14d ; 47a-47d) et de chaque couche isolante (13a-13d ; 46a-46d) soit exposée, et
le montage d'organes conducteurs de l'électricité (19a-19d ; 61a-61d) entre les faces exposées d'extrémité des couches conductrices individuelles dans chaque tronçon discontinu d'extrémité du stratifié en forme de boucle (15 ; 45) afin que l'enroulement à plusieurs spires soit terminé,
caractérisé en ce que
la structure de base (10, 11 ; 10, 44) comporte en outre une couche de base (11 ; 44) formée dans une région déterminée à la face supérieure du substrat (10), la face supérieure de la couche de base (11 ; 44) ayant une fente pratiquement prédéterminée (ϑ) par rapport à la face supérieure du substrat (10), et la partie du stratifié (15 ; 45) placée sur la couche de base (11, 44) a pratiquement la même pente par rapport à la partie de stratifié (15 ; 45) placée sur le substrat (10) que la face supérieure de la couche de base (11 ; 44) par rapport au substrat (10),
le procédé comporte en outre une autre étape de formation d'une couche isolante supplémentaire (16 ; 48) de recouvrement, suffisamment épaisse afin qu'elle dépasse au-delà de la face supérieure du stratifié (15 ; 45) sur le stratifié en forme de boucle (15 ; 45) et à l'intérieur de ce stratifié avant l'étape d'enlèvement, et en ce que
au cours de l'étape d'enlèvement, la couche isolante (16 ; 48) de recouvrement formée entre les sections discontinues d'extrémité et la partie supérieure de chaque section discontinue d'extrémité du stratifié en forme de boucle (15 ; 45) sont enlevées afin qu'elles soient pratiquement parallèles à la face supérieure du substrat (10), et lesdits organes conducteurs (19a-19c ; 61a-61c) sont supportés par la couche isolante (16 ; 48) de recouvrement à un emplacement compris entre les sections discontinues d'extrémité du stratifié en forme de boucle (15 ; 45).

2. Procédé selon la revendication 1, dans lequel l'enroulement à plusieurs spires est destiné à être utilisé dans une tête magnétique à couches.

3. Procédé selon la revendication 1, dans lequel la face supérieure de la couche de base (11) se trouve dans un plan incliné.

4. Procédé selon la revendication 3, dans lequel l'angle d'inclinaison (ϑ) du plan incliné de la couche de base (11) ne dépasse pas 45°.

5. Procédé selon la revendication 1, dans lequel la face supérieure de la couche de base (44) est inclinée et a des gradins.

6. Procédé selon la revendication 5, dans lequel les longueurs (l₁, l₂, l₃) des gradins individuels ne sont pas inférieures aux épaisseurs des couches conductrices respectives (41, 42, 43) du stratifié (45).
